# EUROPEAN PATENT SPECIFICATION

(11) **EP 2 611 235 B1**
(45) Date of publication and mention of the grant of the patent: **21.11.2018**
(21) Application number: 10856298.4
(22) Date of filing: 27.08.2010
(51) Int. Cl.: H04W 36/00, H04W 24/02

(54) **METHOD AND DEVICE FOR DISCOVERING 2G NEIGHBOUR CELLS AT THE EDGE OF AN AREA COVERED BY A 3G CELL**
VERFAHREN UND VORRICHTUNG ZUR ENTDECKUNG VON 2G-NACHBARZELLEN AM RAND EINES VON EINER 3G-ZELLE ABGEDECKTEN BEREICHS
PROCÉDÉ ET DISPOSITIF DE DÉCOUVERTE DE CELLULES VOISINES 2G AU BORD D'UNE ZONE COUVERTE PAR UNE CELLULE 3G

(43) Date of publication of application: 03.07.2013
(73) Proprietor: ZTE Corporation, Shenzhen, Guangdong 518057 (CN)
(72) Inventor: YIN, Jianhua, Shenzhen Guangdong 518057 (CN); ZHU, Yongjun, Shenzhen Guangdong 518057 (CN)
(74) Representative: Carangelo, Pierluigi
(86) International application number: PCT/CN2010/076424
(87) International publication number: WO 2012/024845

(56) References cited:
- CN-A- 1 972 518
- CN-A- 101 340 703
- CN-A- 101 389 125
- CN-A- 101 730 114
- GB-A- 2 399 990
- US-A- 5 854 981
- US-A1- 2005 288 017
- CHRISTOPHER BRUNNER ET AL: "Inter-System Handover Parameter Optimization", 2006 IEEE 64TH VEHICULAR TECHNOLOGY CONFERENCE : VTC 2006-FALL ; 25 - 28 SEPTEMBER 2006, MONTREAL, QUEBEC, CANADA, PISCATAWAY, NJ : IEEE OPERATIONS CENTER, 1 September 2006 (2006-09-01), pages 1-6, XP031051240, ISBN: 978-1-4244-0062-1

## Description

### Field of the Invention

The present invention relates to radio network optimization in the field of communications, and in particular to addition and optimization of neighbour cells during handover between the 3rd Generation mobile communication system (3G), i.e., Universal Mobile Telecommunications System (UMTS) and the 2nd Generation mobile communication system (2G), i.e., Global System for Mobile Communications (GSM), so as to automatically discover suitable 2G cells at the edge of 3G network as candidate neighbour cells of a 3G cell.

### Background of the Invention

When superposing and deploying the 3G network on the existing 2G network, the problem of handover from the edge of the 3G network to the 2G network is almost inevitably involved. For improving the success rate of handover from the 3G to the 2G, the completeness and accuracy of the configuration of 2G neighbour cells are one of key problems in the optimization process.

A lot of drive tests are required to discover suitable 2G neighbour cells existing at the edge of the 3G with traditional means; the typical way is to use 2G and 3G dual-mode scanner to measure signal levels of two networks at the same time. When the quality of the 3G network deteriorates to a certain extent, the information of the 2G cells scanned at this point is read, suitable 2G cells are selected according to the information and configuring the suitable 2G cells to be the neighbour cells of 3G-2G handover.

Due to the complexity of network optimization, it requires quite large investment on time and cost by the way depending mainly on drive test. It requires repeated drive tests when performing intersystem optimization of neighbour cells to an area, which causes greater influence on the efficiency of network optimization. Besides, it is not convenient to use scanner to discover intersystem neighbour cells in places such as room and elevator hoistway where 3G coverage is poor. Therefore, more efficient method is needed to perform the configuration of the 2G neighbour cells. Document US2005/288017 A1 discloses a method for inter-system HO, and in particular 3G to 2G HO, wherein the list of 2G neighbour cells is determined using a hierarchy table generated from coverage maps including the best and the 2nd best cells for a frequency band/level. When a 3G-2G HO is needed, based on the frequency band and position reported by the UE, a selection, from the hierarchy table, is performed in order to determine the starting cell. Further on, a candidate 2G cell list is generated by extracting from the hierarchy table, the neighbours of the starting cell, calculating the surface of overlap with the starting cell, comparing this overlap to a threshold and applying weighing. A candidate 2G neighbour cell is further selected by only considering the cells above a certain field level threshold.

### Summary of the Invention

The present invention is to solve the problem that an automatic and efficient method is currently lacked for identifying and optimizing the 2G neighbour cells in the process of performance optimization for 3G network handover, and provide a method and a device as defined in claims 1 and 7, for automatically discovering the 2G neighbour cells at the edge of an area covered by the 3G cell according to Measurement Report (MR) data in the 2G network and the 3G network.

The embodiments and/or examples of the following description which are not covered by the appended claims are considered as not being part of the present invention.

The present invention automatically discovers the 2G neighbour cells according to the MR data, can select the 2G cells which are most suitable for handover by analyzing the distribution of 2G signals at the edge of the 3G network, and optimize the existing configuration of neighbour cells of 3G and 2G network, and thereby the success rate of handover from 3G to 2G network is improved.

### Brief Description of the Drawings

Fig. 1 shows a flowchart of a method for discovering 2G neighbour cells at the edge of an area covered by the 3G cell in the present invention;
Fig. 2 shows a flowchart of extracting information of a 2G cell on each geographical grid in the present invention;
Fig. 3 shows a flowchart of acquiring an edge location of a 3G cell in the present invention;
Fig. 4 shows a structural diagram of acquiring candidate 2G neighbour cells according to an edge location of the 3G network in the present invention; and
Fig. 5 shows a structural diagram of a device for discovering 2G neighbour cells at the edge 3G cell coverage in the present invention.

### Detailed Description of Embodiments

The present invention provides a method for discovering 2G neighbour cells at the edge of an area covered by a 3G cell. In the method, the main idea of discovering the 2G neighbour cells according to the MR data is: acquiring signal strength condition of 2G cells at each geographical grid (for example, an area of 100x100m) in existing 2G network according to the geographical distribution statistics of MR sample points in the deployed 2G network; and furthermore, acquiring a system edge where the 3G cell prepares to initiate a handover of Circuit Switching (CS) and Packet Switching (PS) through geographical location, selecting the 2G cells which are most suitable for handover through the analysis of distribution of 2G signals at the system edge, hereby, optimizing and adjusting existing configuration of 3G-2G neighbour cells.

The implementation of the method provided by the present invention needs two preconditions as follows.

Precondition 1: the 2G network has been configured with an MR system, and the coverage condition of the 2G network can be normally acquired;

Precondition 2: the edge of the 3G cell has been simply configured with a few 2G neighbour cells (which do not have to be optimized), so as to trigger the process of discovering the edge of the 3G cell.

For a 2G network that has been operated and maintained for a long time, it is not difficult to meet above two preconditions.

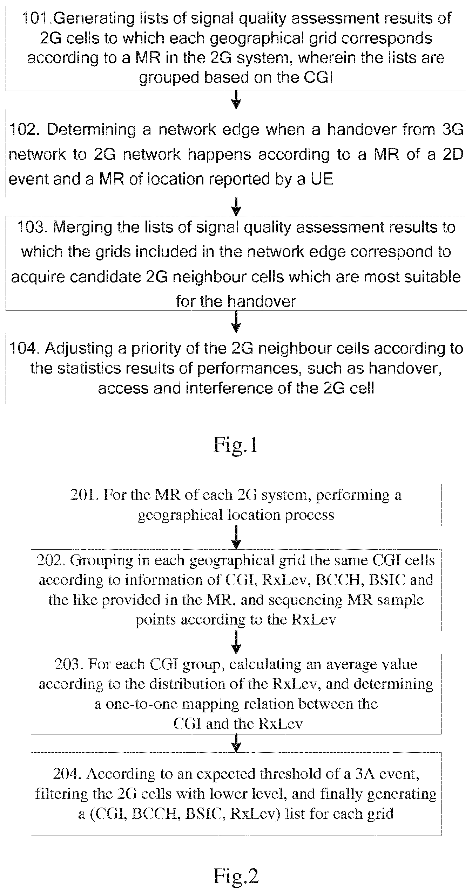

Fig. 1 shows a flowchart of a method for discovering 2G neighbour cells at the edge of an area covered by the 3G cell in the present invention, wherein the method mainly comprises the following steps.

Step 101: generating, for each grid which meets the requirement for a level threshold of the 2G cell in a 3A event, the lists Li of signal quality assessment results of the 2G cells on the grid according to the MR, wherein the lists are grouped based on the CGI.

The 3A event is defined as the quality of the 3G system is lower than a threshold, and the quality of the 2G system is higher than a threshold at present. The occurrence of the 3A event indicates that the 3G system has virtually no success in providing good service for terminals, and it is required to switch to the 2G system with better signal quality in time. Thus, after the occurrence of the 3A event, an RNC usually determines and instructs the terminals to perform a 3G-2G handover.

Fig. 2 shows a flowchart of generating the list Li for each grid according to the MR in preferred embodiment of the present invention, comprising the following sub-steps.

Step 201: for the MR of each 2G system, performing geographical location process to the MR to obtain longitude and latitude of the MR sample point.

There is mature algorithm for geographical location process in the 2G network and the 3G network, and the present invention does not limit the specifically used algorithm for geographical location, so it will not be repeated herein.

Step 202: in each geographical grid, grouping the same CGI cells according to the information of a CGI, an RxLev, a BCCH, a BSIC and the like provided in the MR, and sequencing MR sample points according to the RxLev.

Supposing a grid of 100x100m comprises N MR sample points, each MR sample point comprises information of the CGI, the RxLev, the BCCH, the BSIC, the BSCID and the like. One part of the information comes from the MR of a standard Um interface (an air interface between a base station and a terminal), and another part is added by a BSC based on the MR of the standard air interface.

Grouping N samples based on the CGI (assuming M groups), and putting the MR samples in each CGI group in descending order according to the RxLev.

Step 203: for each CGI group, calculating an average value according to the distribution of the RxLev, and determining a one-to-one mapping relation between the CGI and the RxLev.

In preferred embodiment of the present invention, the average value is calculated for each CGI group which has been sorted according to the RxLev by the following way: removing top 15% of the MR samples and bottom 15% of the MR samples, performing average calculation of RxLev values to the rest 70% of the MR samples to obtain a one-to-one mapping relation between each CGI and the RxLev, and then there are M mapping relations obtained.

Step 204: according to an expected threshold of the 3A event, filtering the 2G cells with lower levels, and finally generating, for each grid, a list Li of signal quality assessment results which at least comprises the information of the CGI and the RxLev.

According to the level threshold of the 2G cell required in the 3A event of the handover from the 3G network to the 2G network, in M mapping relations between the CGI and the RxLev, deleting the items whose average RxLev does not meet the threshold, and finally generating, for each grid, a list of signal quality assessment results which at least comprises the information of the CGI and the RxLev for later use. Furthermore, the list can also comprises the information of the BCCH, the BSIC and the like, wherein the information of the BCCH and the BSIC can be used for judging whether there is a situation of same frequency and same colour code.

Step 102: determining the network edge when a handover from 3G network to 2G network happens by using the location algorithm, according to the MR of a 2D event and the MR of location reported by a UE. The network edge is the linear or planar area composed of grids.

The 2D event is defined as assessment quality of currently used 3G carrier is lower than a certain threshold. The occurrence of the 2D event aims to warn the RNC that the quality of the signal of the 3G system is deteriorating, and it is necessary to prepare to search a better 3G or 2G cell instead. Thus, after the 2D event happens, the RNC usually instructs terminals to measure the candidate 2G neighbour cells to expect to find a suitable 2G cell for performing a handover after the 3A event happens.

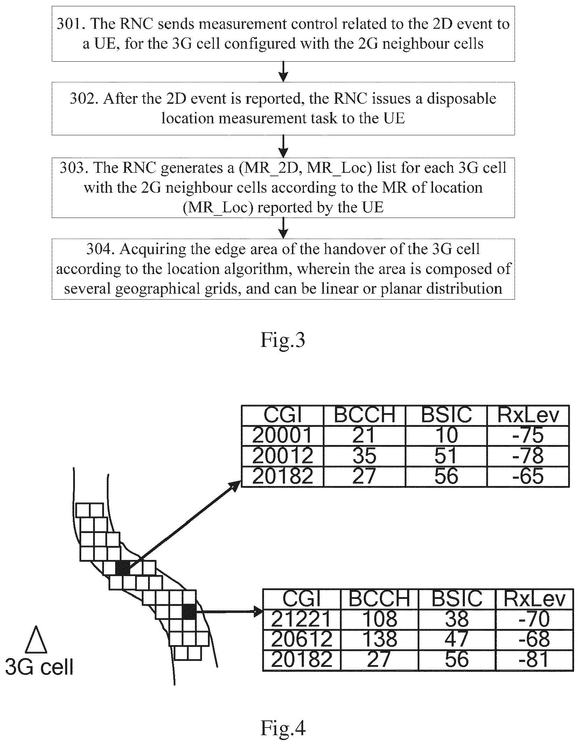

Fig. 3 shows a flowchart of determining a network edge when a handover from 3G network to 2G network happens in preferred embodiment of the present invention, mainly comprising the following steps.

Step 301: the Radio Network Controller (RNC) sends measurement control related to the 2D event to a UE, for the 3G cell configured with the 2G neighbour cells.

If a certain 3G cell C has been configured with several initial 2G neighbour cells, then the measurement control related to the 2D event will be sent to the UE when a CS/PS call is established in the cell C.

Step 302: after the 2D event is reported, the RNC issues a location measurement task to the UE, the task report can be submitted only once.

After the 2D event is triggered, the UE reports the MR of 2D event (MR_2D) to the RNC. Then the RNC regards that the quality of the carrier of the cell C has deteriorated to a threshold, and it is necessary to switch to the 2G system in time. The RNC can immediately send a location measurement task to the UE after receiving the MR of the 2D event, wherein the MR is required to be reported for only once. According to the capability of the UE, the RNC may send a location measurement of Assisted Global Positioning System (AGPS), or send a location measurement of Tx-Rx time difference type.

Step 303: the RNC generates a (MR_2D, MR_Loc) list for each 3G cell with the 2G neighbour cells according to the MR of location (MR_Loc) reported by the UE.

The RNC generates a (MR_2D, MR_Loc) list for the cell C by combining the MR of the 2D event with the MR of location (MR_Loc) reported by the UE, wherein the information in the MR_2D can also be used for assisted location calculation.

Step 304: acquiring the edge area of the handover of the 3G cell according to the location algorithm.

With the location algorithm, a geographical grid can be located for each value in the (MR_2D, MR_Loc) list; the linear or planar area composed of several geographical grids located by the (MR_2D, MR_Loc) list is the edge of the handover from the cell C to the GSM system.

There are four points further described below.
1) If the handover area of the cell C comprises many discrete grids which are separated geographically, then it is indicated that handover area of the cell C is more complex, which may be caused by the complexity of wireless environment or the unreasonable design of antenna feeder. Further analysis is required to be performed by combining engineering parameters of the cell with environment information.
2) The handover edge of the cell C in true sense should be characterized by the corresponding geographical location when the 3A event or a 3C event (defined as the assessment quality of the 2G system is higher than a certain threshold) happens, instead of the 2D event. However, in practice of 3G-2G network optimization, the threshold of 3G carrier quality defined in the 3A event is lower than that defined in the 2D event, that is to say, it is believed that the 3A event will be triggered with a great probability (if the 2G signal is strong enough) only if the 2D event is trigged. Then the intersystem handover edge acquired according to the 2D event in the second step can be regarded as a reasonable edge. Because the 3C event is unrelated to carrier quality of the 3G cell, the conclusion is not influenced.
3) Different thresholds of the 2D event can be defined for the CS and PS services, so the handover edges to which the CS and PS services correspond may be different. The greater difference between the thresholds of the 2D event of the CS and PS services is, the more grids included in the handover edge of the cell C are.
4) Strictly speaking, the MR_Loc is acquired after the MR_2D, so if the UE is in moving state, the geographical location acquired by decoding according to the MR_Loc is slightly different from the geographical location where the 2D event happens. However, in practical application, the difference has little influence, and can be ignored.

Step 103: merging the lists Li of signal quality assessment results to which the grids included in the determined network edge correspond to acquire the candidate 2G neighbour cells which are most suitable for the handover.

As shown in Fig. 4, supposing the edge area of the 3G-2G handover is shown as bar-shaped area in the figure, and a set of grids in the edge area of the handover is B, wherein B equals to {b1, b2, ..., bi, bn}. For each grid bi in the set B, there is a corresponding list Li obtained through Step 101, wherein the list Li comprises a (CGI, BCCH, BSIC, RxLev) field. All the sets composed of the lists Li are merged, and the merging way is same as that in Step 101. After merging, first, all (CGI, BCCH, BSIC, RxLev) items in the set are grouped based on the CGI; and second, arithmetic average is performed to multiple RxLev values in each group to obtain an average RxLev value to which each CGI corresponds, and a one-to-one mapping is established between the CGI and the average RxLev value, for being convenient to sequence according to the RxLev later.

Supposing a processing result comprises items of P formats (CGI, BCCH, BSIC, RxLev), if P is less than or equal to 32, then the 2G neighbour cells of the cell C are characterized by P CGIs; and if P is more than 32, then these CGIs are put in descending order, and the first 32 CGIs are taken as the 2G neighbour cells of the cell C. If there is requirement for number of the 2G neighbour cells, then selecting several cells with top RxLev.

It should be noted that if the situation that the BCCH and the BSIC are same, but the CGI is different is found in the P items, then it is indicated that there is a situation of same frequency and same colour code existing in the 2G neighbour cells, which is usually not allowed to exist. If the situation occurs, the CGI with the strongest RxLev can be selected as the final 2G neighbour cell, the CGI with worse RxLev can be removed, and log files can be outputted to warn engineers about that.

Step 104: further adjusting the priority of the 2G neighbour cells according to the statistics results of performances, such as handover, access and interference and so on of the 2G cell, to obtain the final configuration of 2G neighbour cells.

The RxLev is not the only factor that decides the suitability of the 2G neighbour cells, so the acquired 2G neighbour cells can be further adjusted combining with other external data. In practice, the 2G neighbour cells with worse performance can be removed according to the statistics results of performances, such as a success rate of handover, a call blocking rate and interference and so on, of these 2G neighbour cells in the 2G system, and thereby the priority of the 2G neighbour cells is further adjusted and the final configuration of 2G neighbour cells is obtained.

A specific embodiment of the method provided by the present invention is described below, which comprises the specific steps as follows.

Step 1: it is supposed that 100 2G MR sample points are reported in a grid, and each sample point comprises the information of the CGI, the RxLev, the BCCH, the BSIC and the BSCID. The MR sample points are grouped based on the CGI, and 4 groups are obtained. It is supposed that the CGI of the first group is 20001, and the group comprises 20 MR sample points, namely corresponding to 20 RxLev values which are sequenced in the descending order as follows (values of the other fields are ignored):
-60, -62, -63, -65, -66,
-68, -69, -70, -72, -74,
-75, -78, -80, -81, -83,
-84, -85, -89, -90, -92

Top 15% of the sample points and bottom 15% of the sample points, namely 3 sample points respectively, are removed. Average calculation are performed to the rest 14 sample points to obtain -75 (dBm), with reference to the first line of the first table in Fig. 4.

It is supposed that the RxLev values to which the CGIs of the other three groups correspond are as follows:
20012 ->-78, 20182 -> -65, 20117 -> -82

If the level threshold of the 2G cell to which the 3A event corresponds is -80dBm, then the cell where the CGI is equal to 20117 is filtered out. The first table in Fig. 4 is obtained from the final result of the processing for the grid.

Step 2: it is supposed that the grids acquired by performing geographical location according to the (MR_2D, MR_Loc) reported by 3G mobile phone compose the strip-shaped area shown in Fig. 4, and each grid in the area corresponds to the information of several 2G cells.

Step 3: if the 3G-2G handover area comprises only two black grids shown in Fig. 4, then the following information can be obtained by merging 2G information tables to which the two black grids correspond and averaging multiple RxLev values under a same CGI:

| CGI | BCCH | BSIC | RxLev |
|---|---|---|---|
| 20001 | 21 | 10 | -75 |
| 20012 | 35 | 51 | -78 |
| 21221 | 108 | 38 | -70 |
| 20612 | 138 | 47 | -68 |
| 20182 | 27 | 56 | -73, corresponding to (-81-65)/2 |

Finally, 5 2G cells are acquired as neighbour cells of the 3G cell shown in Fig. 4. If only 4 2G neighbour cells can be selected according to the configuration, then screening is performed according to the RxLev, and the cell where the CGI is equal to 20012 is filtered out, due to the lowest average RxLev of the cell.

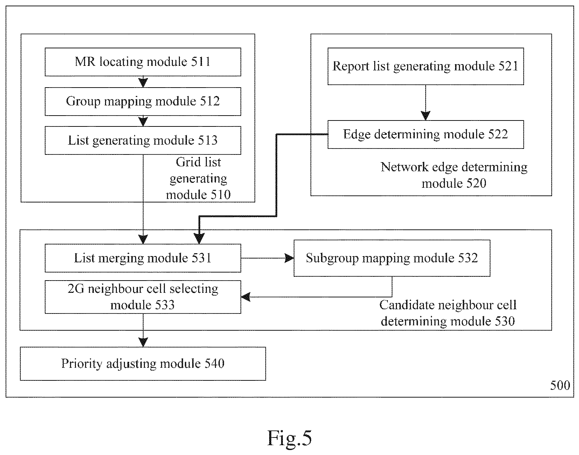

Fig. 5 shows a structural diagram of a device for discovering the 2G neighbour cells at the edge 3G cell coverage in the present invention. The device 500 mainly comprises: a grid list generating module 510, a network edge determining module 520 and a candidate neighbour cell determining module 530.

The grid list generating module 510 is configured to generate, for each grid which meets the requirement for a level threshold of the 2G cells in a 3A event, the lists of signal quality assessment results of the 2G cells on the grid according to the MR in the 2G system, wherein the lists are grouped based on the CGI.

The grid list generating module 510 further comprises:
an MR locating module 511, which is configured to, for the MR of each 2G system, perform geographical location process to the MR to obtain longitude and latitude of the MR sample point;
a group mapping module 512, which is configured to group in each grid the MR based on the CGI according to the information provided in the MR, calculate, for each CGI group, an average value according to the distribution of the RxLev, and determine a one-to-one mapping relation between the CGI and the RxLev; and
a list generating module 513, which is configured to, according to the requirement for level threshold of the 2G cells in the 3A event, filter the 2G cells with lower levels, and finally generate for each grid a list of signal quality assessment results which at least comprises the information of the CGI and the RxLev.

The network edge determining module 520 is configured to determine the network edge when a handover from 3G network to 2G network happens according to the MR of the 2D event and the MR of location reported by a UE, wherein the network edge is a linear or planar area composed of grids.

The network edge determining module 520 further comprises:
a report list generating module 521, which is configured to generate the (MR_2D, MR_Loc) list for each 3G cell with the 2G neighbour cells according to the MR of 2D event (MR_2D) and the MR of location (MR_Loc) reported by the UE;
a edge determining module 522, which is configured to acquire several geographical grids to which the (MR_2D, MR_Loc) list corresponds through location algorithm, and determine the network edge of the handover from the 3G cell to the 2G cell through the linear or planar area composed of the several geographical grids.

The candidate neighbour cell determining module 530 is configured to merge the lists of signal quality assessment results to which the grids included in the network edge correspond to acquire the candidate 2G neighbour cells which are most suitable for the handover.

The candidate neighbour cell determining module 530 further comprises:
a list merging module 531, which is configured to merge the lists of signal quality assessment results to which the grids included in the network edge correspond, according to the list of signal quality assessment results which is output by the grid list generating module 510 for each grid and the network edge determined by the network edge determining module 520;
a subgroup mapping module 532, which is configured to group the lists of signal quality assessment results which are merged by the list merging module 531 according to the CGI, perform arithmetic average to multiple RxLev values in each group to obtain the average RxLev value to which each CGI corresponds, and establish a one-to-one mapping between the CGI and the average RxLev value; and
a 2G neighbour cell selecting module 533, which is configured to, according to the requirement for the number of the 2G neighbour cells, select the 2G neighbour cells with better average RxLev values from results output by the subgroup mapping module 532 as the candidate 2G neighbour cells which are most suitable for the handover.

Preferably, the device can further comprise: a priority adjusting module, which is configured to adjust the priority of the candidate 2G neighbour cells determined by the candidate neighbour cell determining module 530, according to the statistics results of performances, such as handover, access and interference.

In summary, the present invention acquires the stronger 2G cells at the edge area of the 3G-2G handover as neighbour cells of the 3G cell by using the MR information of existing 2G network, which is similar to using a dual-mode scanner to scan the 2G cells with stronger signals in the area of the 3G-2G handover as neighbour cells. The present invention greatly assists in automatically performing optimization to neighbour cells of the 3G-2G handover.

## Claims

1. A method for discovering 2nd Generation mobile communication system, 2G, neighbour cells at the edge of an area covered by a 3rd Generation mobile communication system, 3G, cell, **characterized by** comprising:
- based on measurement reports, MR, in the 2G system, generating (101) lists, Li, of signal quality assessment results, RxLev, of the 2G cells, each list being generated for a geographical grid according to the geographical distribution of the MR, and wherein, in each grid, the cells are grouped by a Cell Global Identity, CGI, and are filtered so that only those whose RxLev meet the level threshold of a 2G cell in a 3A event are included in the list Li;
- determining (102) a network edge for the 3G-2G handover as a linear or planar area composed of geographical grids, wherein each grid can be located for each value in a list obtained by combining a MR of a 2D event and a MR of location reported by a UE;
- merging (103) the lists Li whose geographical grids correspond to the ones included in the determined network edge so as to determine the candidate 2G neighbor cell which are most suitable for the handover.

2. The method according to Claim 1, **characterized in that** generating (101) lists, Li, of signal quality assessment results, RxLev, of the 2G cells, each list being generated for a geographical grid according to the geographical distribution of the MR comprises:
for each MR of the 2G system, performing a geographical location process to the MR to obtain longitude and latitude of MR sample points (201);
for each CGI group, calculating an average value according to a distribution of a received signal level, RxLev, and determining a one-to-one mapping relation between the CGI and the RxLev (203); and
finally generating for each grid a list of signal quality assessment results which at least comprises information of the CGI and the RxLev (204).

3. The method according to Claim 2, **characterized in that** determining the network edge comprises:
sending, by a Radio Network Controller ,RNC, measurement control related to the 2D event to the UE, for the 3G cell configured with the 2G neighbour cells (301);
reporting, by the UE, the MR of the 2D event, MR_2D, and issuing, by the RNC, a location measurement task (302);
generating, by the RNC, the (MR_2D, MR_Loc) list for each 3G cell with the 2G neighbour cells according to the MR of location ,MR_Loc, reported by the UE (303); and
acquiring several geographical grids to which the (MR_2D, MR_Loc) list corresponds through a location algorithm, wherein a linear or planar area composed of the several geographical grids forms the network edge of the handover from the 3G cell to the 2G cell (204).

4. The method according to Claim 3, **characterized in that** merging (103) the lists Li whose geographical grids correspond to the ones included in the determined network edge so as to determine the candidate 2G neighbour cells which are most suitable for the handover comprises:
merging the lists of signal quality assessment results to which the grids comprised in the network edge correspond;
after merging, grouping all items in a set based on the CGI, performing arithmetic average to multiple RxLev values in each group to obtain an average RxLev value to which each CGI corresponds, and establishing a one-to-one mapping between the CGI and the average RxLev value; and
according to the requirement for the number of the 2G neighbour cells, selecting 2G neighbour cells with better average RxLev values as the candidate 2G neighbour cells which are most suitable for the handover.

5. The method according to Claim 4, **characterized in that** if items in the list of signal quality assessment results to which each grid corresponds comprise information of a Broadcast Control Channel ,BCCH, and a Base Station Identity Code ,BSIC, when merging the lists of signal quality assessment results to which the grids comprised in the network edge correspond, if a situation that the BCCH and the BSIC are same, but the CGI is different is found, then a CGI with a strongest RxLev is selected as a candidate 2G neighbour cell, and a CGI with a worse RxLev is removed.

6. The method according to Claim 1, **characterized in that** the method further comprises:
adjusting a priority of the candidate 2G neighbour cells according to statistics results of performances, such as handover, access and interference of the 2G cells, to obtain a final configuration of the 2G neighbour cells.

7. A device for discovering 2nd Generation mobile communication system ,2G, neighbour cells at the edge of an area covered by a 3rd Generation mobile communication system ,3G, cell, **characterized by** comprising:
a grid list generating module (510), which is configured to generate lists, Li, based on measurement reports, MR, in the 2G system, of signal quality assessment results, RxLev, of the 2G cells, each list being generated for a geographical grid according to the geographical distribution of the MR, and wherein, in each grid, the cells are grouped by a Cell Global Identity, CGI, and are filtered so that only those whose RxLev meet the level threshold of a 2G cell in a 3A event are included in the list Li;
a network edge determining module (520), which is configured to determine a network edge for the 3G-2G handover as a linear or planar area composed of geographical grids, wherein each grid can be located for each value in a list obtained by combining a MR of a 2D event and a MR of location reported by a UE and
a candidate neighbour cell determining module (530), which is configured to merge the lists Li whose geographical grids correspond to the ones included in the determined network edge so as to determine the candidate 2G neighbor cell which are most suitable for the handover.

8. The device according to Claim 7, **characterized in that** the grid list generating module (510) comprises:
a MR locating module (511), which is configured to, for the MR of each 2G system, perform a geographical location process to the MR to obtain longitude and latitude of MR sample points;
a group mapping module (512), which is configured to group the MR based on the CGI according to information provided in the MR in each grid, calculate, for each CGI group, an average value according to a distribution of a received signal level, RxLev, and determine a one-to-one mapping relation between the CGI and the RxLev; and
a list generating module (513), which is configured to, according to the requirement for the level threshold of the 2G cells in the 3A event, filter the 2G cells with lower level, and finally generate for each grid a list of signal quality assessment results which at least comprises information of the CGI and the RxLev.

9. The device according to Claim 8, **characterized in that** the network edge determining module (520) comprises:
a report list generating module (521), which is configured to generate the (MR_2D, MR_Loc) list for each 3G cell with the 2G neighbour cells according to the MR of the 2D event, MR_2D, and the MR of location, MR_Loc, reported by the UE; and
an edge determining module (522), which is configured to acquire several geographical grids to which the (MR_2D, MR_Loc) list corresponds through a location algorithm, and determine the network edge of the handover from the 3G cell to the 2G cell through a linear or planar area composed of the several geographical grids.

10. The device according to Claim 9, **characterized in that** the candidate neighbour cell determining module (530) comprises:
a list merging module (531), which is configured to merge the lists of signal quality assessment results to which the grids comprised in the network edge correspond;
a subgroup mapping module (532), which is configured to group the merged lists of signal quality assessment results based on the CGI, perform arithmetic average to multiple RxLev values in each group to obtain the average RxLev value to which each CGI corresponds, and establish a one-to-one mapping between the CGI and the average RxLev value; and
a 2G neighbour cell selecting module (533), which is configured to, according to the requirement for the number of the 2G neighbour cells, select 2G neighbour cells with better average RxLev values from results output by the subgroup mapping module as the candidate 2G neighbour cells which are most suitable for the handover.

11. The device according to Claim 7, **characterized in that** the device further comprises:
a priority adjusting module (540), which is configured to adjust a priority of the candidate 2G neighbour cells determined by the candidate neighbour cell determining module, according to statistics results of performances, such as handover, access and interference.

## Patentansprüche

1. Verfahren zur Entdeckung eines Mobilkommunikationssystems der zweiten Generation, 2G, Nachbarzellen am Rand eines von einem Mobilkommunikationssystem der dritten Generation, 3G, abgedeckten Gebiets, **gekennzeichnet dadurch, dass** es Folgendes umfasst:
- basierend auf Messberichten, MR, im 2G-System, Erzeugen (101) von Listen, Li, von Signalqualitätsbewertungsergebnissen, RxLev, der 2G-Zellen, wobei jede Liste für ein geografisches Gitter gemäß der geografischen Verteilung des MR erzeugt wird und wobei in jedem Gitter die Zellen durch eine Cell Global Identity, CGI, gruppiert und so gefiltert werden, dass nur diejenigen, deren RxLev den Pegelschwellenwert einer 2G-Zelle in einem 3A-Ereignis erfüllt, in der Liste Li beinhaltet sind;
- Bestimmen (102) eines Netzwerkrandes für die 3G-2G-Übergabe als ein aus geografischen Gittern bestehender linearer oder planarer Bereich, wobei jedes Gitter für jeden Wert in einer Liste angeordnet werden kann, die durch Kombinieren eines MR eines 2D-Ereignisses und eines MR einem von einem UE (Benutzergerät) gemeldeten Standort erhalten wird;
- Zusammenführen (103) der Listen Li, deren geografische Gitter mit denjenigen übereinstimmen, die in dem bestimmten Netzwerkrand beinhaltet sind, um die Kandidaten-2G-Nachbarzellen zu bestimmen, die für die Übergabe am besten geeignet sind.

2. Verfahren nach Anspruch 1, **dadurch gekennzeichnet, dass** Erzeugen (101) von Listen, Li, von Signalqualitätsbewertungsergebnissen, RxLev, der 2G-Zellen, wobei jede Liste für ein geografisches Gitter gemäß der geografischen Verteilung des MR erzeugt wird, Folgendes umfasst:
für jeden MR des 2G-Systems, Durchführen eines geografischen Standortprozesses an dem MR, um den Längen- und Breitengrad von MR-Abtastpunkten (201) zu erhalten;
für jede CGI-Gruppe, Berechnen eines Durchschnittswerts gemäß einer Verteilung eines empfangenen Signalpegels, RxLev, und Bestimmen einer Eins-zu-Eins-Zuordnungsbeziehung zwischen dem CGI und dem RxLev (203); und
schließlich Erzeugen einer Liste von Signalqualitätsbewertungsergebnissen für jedes Gitter, die mindestens Informationen der CGI und des RxLev (204) umfasst.

3. Verfahren nach Anspruch 2, **dadurch gekennzeichnet, dass** Bestimmen des Netzwerkrandes Folgendes umfasst:
Senden, durch eine Funknetzsteuerung, RNC, von Messsteuerung in Bezug auf das 2D-Ereignis an das UE für die 3G-Zelle, die mit den 2G-Nachbarzellen (301) konfiguriert ist;
Melden des MR des 2D-Ereignisses, MR_2D, durch das UE und Ausgeben einer Standortmessaufgabe (302) durch den RNC;
Erzeugen der Liste (MR_2D, MR_Loc) für jede 3G-Zelle mit den 2G-Nachbarzellen durch den RNC gemäß dem MR des Standorts, MR_Loc, der von dem UE (303) gemeldet wird; und
Erfassen von mehreren geografischen Gittern, denen die Liste (MR_2D, MR_Loc) entspricht, durch einen Standortalgorithmus, wobei ein linearer oder planarer Bereich, der aus den mehreren geografischen Gittern besteht, den Netzwerkrand der Übergabe von der 3G-Zelle zur 2G-Zelle (204) bildet.

4. Verfahren nach Anspruch 3, **dadurch gekennzeichnet, dass** das Zusammenführen (103) der Listen Li, deren geografische Gitter mit denjenigen in dem bestimmten Netzwerkrand übereinstimmen, um die Kandidaten-2G-Nachbarzellen zu bestimmen, die für die Übergabe am besten geeignet sind, Folgendes umfasst:
Zusammenführen der Listen von Signalqualitätsbewertungsergebnissen, denen die in dem Netzwerkrand enthaltenen Netze entsprechen;
nach dem Zusammenführen, Gruppieren aller Elemente in einem Satz basierend auf der CGI, Ausführen eines arithmetischen Mittelwerts für mehrere RxLev-Werte in jeder Gruppe, um einen durchschnittlichen RxLev-Wert zu erhalten, dem jede CGI entspricht, und Erstellen einer Eins-zu-Eins-Zuordnung zwischen der CGI und dem durchschnittlichen RxLev-Wert; und
gemäß der Anforderung für die Anzahl der 2G-Nachbarzellen, Auswählen von 2G-Nachbarzellen mit besseren durchschnittlichen RxLev-Werten als die Kandidaten-2G-Nachbarzellen, die für die Übergabe am besten geeignet sind.

5. Verfahren nach Anspruch 4, **dadurch gekennzeichnet, dass**, wenn Elemente in der Liste von Signalqualitätsbewertungsergebnissen, denen jedes Gitter entspricht, Informationen eines Rundfunksteuerkanals, BCCH, und eines Basisstationsidentitätscodes, BSIC, beim Zusammenführen der Signallisten Qualitätsbewertungsergebnisse umfassen, denen die in dem Netzwerkrand enthaltenen Gitter entsprechen, wenn eine Situation, in der der BCCH und der BSIC gleich sind, aber die CGI anders ist, festgestellt wird, dann eine CGI mit einem stärksten RxLev als eine Kandidaten-2G-Nachbarzelle ausgewählt wird und eine CGI mit einem schlechteren RxLev entfernt wird.

6. Verfahren nach Anspruch 1, **dadurch gekennzeichnet, dass** das Verfahren ferner Folgendes umfasst:
Anpassen einer Priorität der Kandidaten-2G-Nachbarzellen gemäß statistischen Ergebnissen von Leistungen, wie etwa Übergabe, Zugriff und Interferenz der 2G-Zellen, um eine endgültige Konfiguration der 2G-Nachbarzellen zu erhalten.

7. Vorrichtung zur Entdeckung des Mobilkommunikationssystems der zweiten Generation, 2G, von Nachbarzellen an dem Rand eines von einem Mobilkommunikationssystem der dritten Generation, 3G, abgedeckten Gebiets, **dadurch gekennzeichnet, dass** es Folgendes umfasst:
ein Gitterlistenerzeugungsmodul (510), das zum Erzeugen von Listen, Li, basierend auf Messberichten, MR, im 2G-System, von Signalqualitätsbewertungsergebnissen, RxLev, der 2G-Zellen konfiguriert ist, wobei jede Liste für ein geografisches Gitter gemäß der geografischen Verteilung des MR erzeugt wird und wobei in jedem Gitter die Zellen durch eine Cell Global Identity, CGI, gruppiert und gefiltert werden, sodass nur diejenigen in der Liste Li beinhaltet sind, deren RxLev bei einem 3A-Ereignis den Pegelschwellenwert einer 2G-Zelle erreicht;
ein Netzwerkrandbestimmungsmodul (520), das zum Bestimmen eines Netzwerkrandes für die 3G-2G-Übergabe als linearer oder planarer Bereich konfiguriert ist, der aus geografischen Gittern besteht, wobei jedes Gitter für jeden Wert in einer Liste angeordnet werden kann, die durch Kombinieren eines MR eines 2D-Ereignisses und eines MR eines von einem UE gemeldeten Standorts erhalten wird, und
ein Kandidatennachbarzellen-Bestimmungsmodul (530), das zum Zusammenführen der Listen Li konfiguriert ist, deren geografische Gitter mit denen in dem bestimmten Netzwerkrand übereinstimmen, um die Kandidaten-2G-Nachbarzellen zu bestimmen, die für die Übergabe am besten geeignet sind.

8. Vorrichtung nach Anspruch 7, **dadurch gekennzeichnet, dass** das Gitterlistenerzeugungsmodul (510) Folgendes umfasst:
ein MR-Ortungsmodul (511), das konfiguriert ist, um für den MR jedes 2G-Systems einen geografischen Ortungsvorgang an dem MR durchzuführen, um Längen- und Breitengrade von MR-Abtastpunkten zu erhalten;
ein Gruppenzuordnungsmodul (512), das so konfiguriert, um den MR basierend auf der CGI gemäß den Informationen dem MR in jedem Gitter zu gruppieren, für jede CGI-Gruppe einen Durchschnittswert gemäß einer Verteilung eines empfangenen Signalpegels, RxLev, zu berechnen und eine Eins-zu-Eins-Zuordnungsbeziehung zwischen der CGI und dem RxLev zu bestimmen; und
ein Listenerzeugungsmodul (513), das konfiguriert ist, um entsprechend der Anforderung für den Pegelschwellenwert der 2G-Zellen in dem 3A-Ereignis die 2G-Zellen mit niedrigerem Pegel zu filtern und schließlich für jedes Gitter eine Liste von Ergebnissen der Signalqualitätsbewertung zu erzeugen, die mindestens Informationen der CGI und des RxLev umfasst.

9. Vorrichtung nach Anspruch 8, **dadurch gekennzeichnet, dass** das Netzwerkrandbestimmungsmodul (520) Folgendes umfasst:
ein Berichtslistenerzeugungsmodul (521), das konfiguriert ist, um die (MR_2D, MR_Loc)-Liste für jede 3G-Zelle mit den 2G-Nachbarzellen gemäß dem MR des 2D-Ereignisses MR_2D und dem durch das UE gemeldeten MR des Standorts, MR_Loc, zu erzeugen; und
ein Kantenbestimmungsmodul (522), das konfiguriert ist, um mehrere geografische Gitter zu erfassen, denen die Liste (MR_2D, MR_Loc) entspricht, durch einen Standortalgorithmus, und den Netzwerkrand der Übergabe von der 3G-Zelle an die 2G-Zelle durch einen linearen oder planaren Bereich zu bestimmen, der aus den mehreren geografischen Gittern besteht.

10. Vorrichtung nach Anspruch 9, **dadurch gekennzeichnet, dass** das Kandidatennachbarzellen-Bestimmungsmodul (530) Folgendes umfasst:
ein Listenzusammenführungsmodul (531), das konfiguriert ist, um die Listen von Signalqualitätsbewertungsergebnissen zusammenzuführen, denen die in dem Netzwerkrand enthaltenen Gitter entsprechen;
ein Untergruppenzuordnungsmodul (532), das konfiguriert ist, um die zusammengeführten Listen von Signalqualitätsbewertungsergebnissen basierend auf der CGI zu gruppieren, ein arithmetisches Mittel für mehrere RxLev-Werte in jeder Gruppe durchzuführen, um den durchschnittlichen RxLev-Wert zu erhalten, dem jede CGI entspricht, und eine Eins-zu-Eins-Zuordnung zwischen der CGI und dem durchschnittlichen RxLev-Wert einzurichten; und
ein 2G-Nachbarzellenauswahlmodul (533), das entsprechend der Anforderung für die Anzahl der 2G-Nachbarzellen konfiguriert ist, um 2G-Nachbarzellen mit besseren durchschnittlichen RxLev-Werten aus Ergebnissen auszuwählen, die von dem Untergruppenzuordnungsmodul als Kandidaten-2G-Nachbarzellen ausgegeben werden, die für die Übergabe am besten geeignet sind.

11. Vorrichtung nach Anspruch 7, **dadurch gekennzeichnet, dass** die Vorrichtung ferner Folgendes umfasst:
ein Prioritätsanpassungsmodul (540), das konfiguriert ist, um eine Priorität der Kandidaten-2G-Nachbarzellen, die durch das Kandidatennachbarzellen-Bestimmungsmodul bestimmt werden, gemäß statistischen Ergebnissen von Leistungen, wie etwa Übergabe, Zugriff und Interferenz, anzupassen.

## Revendications

1. Procédé de découverte de cellules voisines de système de communication mobile de deuxième génération, 2G, au bord d'une zone couverte par une cellule de système de communication mobile de troisième génération, 3G, **caractérisé en ce qu'**il comprend :
- sur la base de rapports de mesure, MR, dans le système 2G, la génération (101) de listes, Li, des résultats d'évaluation de la qualité de signal, RxLev, des cellules 2G, chaque liste étant générée pour une grille géographique en fonction de la répartition géographique du MR et, dans chaque grille, les cellules sont regroupées par une identité globale de cellule, CGI et sont filtrées de sorte que seules celles dont le RxLev atteint le seuil de niveau d'une cellule 2G dans un événement 3A soient incluses dans la liste Li ;
- la détermination (102) d'un bord de réseau pour le transfert 3G-2G sous la forme d'une zone linéaire ou plane composée de grilles géographiques, chaque grille pouvant être localisée pour chaque valeur dans une liste obtenue par combinaison d'un MR d'un événement 2D et d'un MR de localisation signalé par un UE ;
- la fusion (103) des listes Li dont les grilles géographiques correspondent à celles incluses dans le bord de réseau déterminé afin de déterminer la cellule 2G voisine candidate la plus adaptée au transfert.

2. Procédé selon la revendication 1, **caractérisé en ce que** la génération (101) de listes, Li, de résultats d'évaluation de la qualité de signal, RxLev, des cellules 2G, chaque liste étant générée pour une grille géographique en fonction de la répartition géographique du MR, comprend :
pour chaque MR du système 2G, l'exécution d'un processus de localisation géographique pour le MR pour obtenir la longitude et la latitude des points d'échantillonnage du MR (201) ;
pour chaque groupe CGI, le calcul d'une valeur moyenne en fonction d'une distribution d'un niveau de signal reçu, RxLev et la détermination d'une relation de mise en correspondance univoque entre la CGI et le RxLev (203) ; et
enfin la génération pour chaque grille d'une liste de résultats d'évaluation de la qualité de signal qui comprend au moins des informations de la CGI et du RxLev (204).

3. Procédé selon la revendication 2, **caractérisé en ce que** la détermination du bord de réseau comprend :
l'envoi par un contrôleur de réseau radio, RNC, d'une commande de mesure liée à l'événement 2D à l'UE pour la cellule 3G configurée avec les cellules voisines 2G (301) ;
la signalisation, par l'UE, du MR de l'événement 2D, MR_2D et l'émission, par le RNC, d'une tâche de mesure de localisation (302) ;
la génération, par le RNC, de la liste (MR_2D, MR_Loc) pour chaque cellule 3G avec les cellules 2G voisines en fonction du MR de localisation, MR_Loc, signalé par l'UE (303) ; et
l'acquisition de plusieurs grilles géographiques auxquelles correspond la liste (MR_2D, MR_Loc) par le biais d'un algorithme de localisation, une zone linéaire ou plane composée des plusieurs grilles géographiques formant le bord du réseau du transfert de la cellule 3G à la cellule 2G (204).

4. Procédé selon la revendication 3, **caractérisé en ce que** la fusion (103) des listes Li dont les grilles géographiques correspondent à celles comprises dans le bord du réseau déterminé afin de déterminer les cellules 2G voisines candidates les plus appropriées pour le transfert, comprend :
la fusion des listes de résultats d'évaluation de la qualité de signal auxquelles correspondent les grilles comprises dans le bord du réseau ;
après la fusion, le regroupement de tous les éléments dans un ensemble en fonction de la CGI, la réalisation d'une moyenne arithmétique sur plusieurs valeurs RxLev dans chaque groupe pour obtenir une valeur moyenne RxLev à laquelle correspond chaque CGI et l'établissement d'une mise en correspondance univoque entre la CGI et le valeur moyenne de RxLev ; et
selon les besoins en nombre de cellules 2G voisines, la sélection des cellules 2G voisines ayant les meilleures valeurs moyennes RxLev comme cellules 2G voisines candidates les plus appropriées pour le transfert.

5. Procédé selon la revendication 4, **caractérisé en ce que** si les éléments de la liste des résultats d'évaluation de la qualité de signal auxquels correspond chaque grille comprennent des informations d'un canal de commande de diffusion, BCCH et un code d'identité de station de base, BSIC, lors de la fusion des listes de résultats d'évaluation de la qualité de signal auxquels correspondent les grilles comprises dans le bord du réseau, si on trouve une situation dans laquelle le BCCH et le BSIC sont identiques, mais que la CGI est différente, alors une CGI ayant le RxLev le plus fort est sélectionnée comme cellule 2G voisine candidate et une CGI ayant un mauvais RxLev est supprimée.

6. Procédé selon la revendication 1, **caractérisé en ce que** le procédé comprend en outre :
l'ajustement d'une priorité des cellules 2G voisines candidates en fonction des résultats statistiques des performances, tels que le transfert, l'accès et l'interférence des cellules 2G, pour obtenir une configuration finale des cellules 2G voisines.

7. Dispositif de découverte de cellules voisines de système de communication mobile de deuxième génération, 2G, au bord d'une zone couverte par une cellule de système de communication mobile de troisième génération, 3G, **caractérisé en ce qu'**il comprend :
un module de génération de liste de grilles (510), conçu pour générer des listes, Li, sur la base de rapports de mesure, MR, dans le système 2G, de résultats d'évaluation de la qualité de signal, RxLev, de cellules 2G, chaque liste étant générée pour un grille géographique selon la répartition géographique du MR et, dans chaque grille, les cellules étant regroupées par une identité globale de cellule, CGI et étant filtrées de sorte que seules celles dont le RxLev atteint le seuil de niveau d'une cellule 2G dans un événement 3A soient incluses dans la liste Li ;
un module de détermination de bord de réseau (520) conçu pour déterminer un bord de réseau pour le transfert 3G-2G en tant que zone linéaire ou plane composée de grilles géographiques, chaque grille pouvant être localisée pour chaque valeur dans une liste obtenue par combinaison d'un MR d'un événement 2D et d'un MR de localisation signalé par un UE et
un module de détermination de cellule voisine candidate (530), qui est conçu pour fusionner les listes Li dont les grilles géographiques correspondent à celles incluses dans le bord de réseau déterminé afin de déterminer la cellule 2G voisine candidate la plus appropriée pour le transfert.

8. Dispositif selon la revendication 7, **caractérisé en ce que** le module de génération de liste de grilles (510) comprend :
un module de localisation de MR (511) conçu pour, pour le MR de chaque système 2G, exécuter un processus de localisation géographique pour le MR afin d'obtenir la longitude et la latitude des points d'échantillonnage du MR ;
un module de mise en correspondance de groupe (512), qui est conçu pour regrouper le MR basé sur la CGI en fonction des informations fournies dans le MR dans chaque grille, calculer, pour chaque groupe CGI, une valeur moyenne en fonction d'une distribution d'un niveau de signal reçu, RxLev et déterminer une relation de correspondance univoque entre la CGI et le RxLev ; et
un module de génération de listes (513), conçu pour, selon les besoins pour le seuil de niveau des cellules 2G dans l'événement 3A, filtrer les cellules 2G ayant un niveau inférieur et générer finalement pour chaque grille une liste de résultats d'évaluation de la qualité de signal qui comprend au moins des informations de la CGI et du RxLev.

9. Dispositif selon la revendication 8, **caractérisé en ce que** le module de détermination de bord de réseau (520) comprend :
un module de génération de liste de rapports (521), qui est conçu pour générer la liste (MR_2D, MR_Loc) pour chaque cellule 3G avec les cellules 2G voisines en fonction du MR de l'événement 2D, MR_2D et du MR de localisation MR_Loc, signalé par l'UE ; et
un module de détermination de bord (522), conçu pour acquérir plusieurs grilles géographiques auxquelles correspond la liste (MR_2D, MR_Loc) par le biais d'un algorithme de localisation et pour déterminer le bord de réseau du transfert de la cellule 3G à la cellule 2G par une zone linéaire ou plane composée des plusieurs grilles géographiques.

10. Dispositif selon la revendication 9, **caractérisé en ce que** le module de détermination de cellules voisines candidates (530) comprend :
un module de fusion de listes (531), qui est conçu pour fusionner les listes de résultats d'évaluation de la qualité de signal auxquelles correspondent les grilles comprises dans le bord de réseau ;
un module de mise en correspondance de sous-groupe (532) conçu pour regrouper les listes fusionnées de résultats d'évaluation de la qualité de signal sur la base de la CGI, réaliser une moyenne arithmétique sur plusieurs valeurs RxLev dans chaque groupe pour obtenir la valeur moyenne RxLev à laquelle correspond chaque CGI et établir une mise en correspondance univoque entre la CGI et la valeur moyenne RxLev ; et
un module de sélection de cellules 2G voisines (533), conçu pour, en fonction du besoin en nombre de cellules voisines 2G, sélectionner des cellules 2G voisines ayant de meilleures valeurs moyennes RxLev à partir des résultats fournis par le module de mise en correspondance de sous-groupes comme cellules 2G voisines candidates qui sont les mieux adaptées au transfert.

11. Dispositif selon la revendication 7, **caractérisé en ce que** le dispositif comprend en outre :
un module d'ajustement de priorité (540), qui est conçu pour ajuster une priorité des cellules 2G voisines candidates déterminées par le module de détermination de cellules voisines candidates, en fonction des résultats statistiques des performances, telles que le transfert, l'accès et l'interférence.
